(19) Europäisches Patentamt
European Patent Office
Office européen des brevets

(11) Veröffentlichungsnummer: **0 009 185**
**B1**

# (12) EUROPÄISCHE PATENTSCHRIFT

(45) Veröffentlichungstag der Patentschrift: **03.03.82**

(51) Int. Cl.³: **D 21 H 3/38,** D 21 H 3/02, C 08 F 8/32

(21) Anmeldenummer: **79103330.1**

(22) Anmeldetag: **07.09.79**

## (54) Schaumarme Oberflächenleimungsmittel für Papier.

(30) Priorität: **19.09.78 DE 2840650**
**18.07.79 DE 2928984**

(43) Veröffentlichungstag der Anmeldung: **02.04.80 Patentblatt 80/7**

(45) Bekanntmachung des Hinweises auf die Patenterteilung: **03.03.82 Patentblatt 82/9**

(84) Benannte Vertragsstaaten: **CH DE FR GB IT NL**

(56) Entgegenhaltungen:
**CH-A-459 741**
**DE-A-2 357 064**
**DE-A-2 501 123**
**DE-A-2 534 603**
**DE-C-876 035**

(73) Patentinhaber: **BAYER AG, Zentralbereich Patente, Marken und Lizenzen, D-5090 Leverkusen 1, Bayerwerk (DE)**

(72) Erfinder: **Sackmann, Günter, Dr., Steinstrasse 24, D-5090 Leverkusen 3 (DE)**
Erfinder: **Kolb, Günter, Dr., Heinrich-von-Kleist-Strasse 7, D-5090 Leverkusen 1 (DE)**
Erfinder: **Probst, Joachim, Dr., Wolfskaul 1, D-5000 Köln 80 (DE)**
Erfinder: **Müller, Friedhelm, Dr., zum Hahnenberg 62, D-5074 Odenthal (DE)**
Erfinder: **Bäumgen, Heinz, Buchenweg 10, D-5090 Leverkusen 1 (DE)**
Erfinder: **Köhler, Armin, Dr., Loensstrasse 3, D-4047 Dormagen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG.

EP 0 009 185 B1

# Schaumarme Oberflächenleimungsmittel für Papier

Die vorliegende Erfindung betrifft anionische Oberflächenleimungsmittel für Papier auf Basis von Maleinsäureanhydrid-Diisobutylen-Copolymerisaten, die unter üblichen Verarbeitungsmethoden eine geringe Neigung zum Schäumen sowie ein breites Anwendungsspektrum – bezogen auf die eingesetzten Papiersorten – haben. Aus den DE-A 2 361 544 und 2 501 123 ist die Herstellung und die Anwendung von Papieroberflächenleimungsmitteln mit ausgezeichneten Eigenschaften bekannt. Es handelt sich dabei um wässrige oder wässrig-alkoholische Alkali-, Amin- oder Ammoniumsalzlösungen von im wesentlichen äquimolekular aufgebauten und in Lösung oder in Suspension hergestellten Copolymerisaten aus Maleinsäureanhydrid und Diisobutylen, deren Anhydridgruppen mit linearen oder verzweigten aliphatischen Monoalkoholen mit 1 bis 20 C-Atomen oder mit cycloaliphatischen Monoalkoholen mit 5 bis 6 C-Atomen zu 10 bis 100 Mol-% zu den entsprechenden Halbestern verestert sein können. Aus der DE-A 2 701 760 ist weiterhin bekannt, bei der in Lösung oder in Suspension durchgeführten Copolymerisation von Maleinsäureanhydrid und Diisobutylen kurz vor oder nach Beendigung der Copolymerisation ein Monomeres der allgemeinen Formel

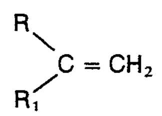 (1)

wobei

R = H, $CH_3$, $C_2H_5$, $-OR_2$, $-OCOCH_3$,

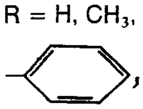, 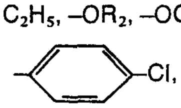 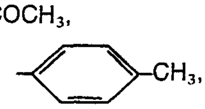

$-CH_2OH$, $-CH_2-O-COCH_3$

$R_1$ = H, $CH_3$ und

$R_2$ = eine lineare oder verzweigte Alkylgruppe mit 1 bis 4 C-Atomen darstellen,

oder Gemische dieser Monomeren untereinander in Mengen zwischen 1 und 12 Mol-%, bezogen auf eingesetztes Maleinsäureanhydrid, zum Polymerisationsansatz zuzugeben, wobei ebenfalls ausgezeichnete anionische Papieroberflächenleimungsmittel erhalten werden, wenn daraus die wässrigen oder wässrig-alkoholischen Alkali-, Amin- oder Ammoniumsalzlösungen hergestellt werden. Die Anhydridgruppen dieser im wesentlichen äquimolekular aufgebauten Copolymerisate können ebenfalls durch Reaktion mit linearen oder verzweigten aliphatischen Monoalkoholen mit 1 bis 20 C-Atomen oder mit cycloaliphatischen Monoalkoholen mit 5 bis 6 C-Atomen zu 10 bis 100 Mol-% zu den entsprechenden Halbestern verestert sein.

Obwohl alle nach den vorgenannten Verfahren hergestellten Oberflächenleimungsmittel für Papier auf ungeleimten und vorgeleimten Papieren ausgezeichnete Leimungseigenschaften zeigen, haben sie jedoch einige anwendungstechnische Nachteile, z.B. das unter bestimmten Anwendungsbedingungen auftretende Schäumen dieser Produkte. Dies tritt vor allem dann auf, wenn die Leimungsflotte, die neben dem Leimungsmittel auch noch bis zu 8 Gew.-% Stärke enthalten kann, mit hartem Wasser angesetzt wird. Ausserdem kann eine verstärkte Schaumneigung der Leimungsflotte auch dann beobachtet werden, wenn die apparativen Gegebenheiten an der Leimpresse das Einschliessen von Luftbläschen in die Leimungsflotte begünstigen. Dies kann z.B. durch eine zu grosse Fallhöhe beim Rücklauf aus der Leimpresse, die Verwendung von Kreiselpumpen anstelle von Kolbenpumpen zum Transport der Leimungsflotte oder auch durch eine ungünstige Rührerform im Arbeitsbehälter verursacht werden. Ausserdem spielt auch der in der Leimungsflotte eingesetzte Stärketyp eine mehr oder weniger grosse Rolle für das Schaumverhalten der o.g. Leimungsmittel.

Das in der Leimungsflotte und an der Leimpresse auftretende Schäumen wirkt sich nachteilig auf den Papierherstellungsprozess aus. Die durch die Leimpresse weggeschleuderten Schaumteilchen können zu Flecken im Papier und in manchen Fällen sogar zu Abrissen der Papierbahn führen, so dass u.U. die Produktion unterbrochen werden muss.

Die vorliegende Anmeldung betrifft daher Oberflächenleimungsmittel für Papier, die bei ihrem Einsatz auf der Leimpresse einer Papiermaschine nur wenig oder aber überhaupt nicht zum Schäumen neigen und die ausserdem ausgezeichnete Leimungseigenschaften besitzen. Wie gefunden wurde, werden derartige Leimungsmittel erhalten, wenn man Copolymerisate aus Maleinsäureanhydrid und Diisobutylen oder entsprechende Terpolymerisate mit weiteren Vinylmonomeren mit geeigneten Aminen zu Halbamiden umsetzt und diese in ihre wässrigen oder wässrig-alkoholischen Alkali-, Amin- oder Ammoniumsalzlösungen überführt.

Gegenstand der Erfindung sind schaumarme Oberflächenleimungsmittel für Papier in Form von wässrigen oder wässrig-alkoholischen Alkali-, Amin- oder Ammoniumsalzlösungen von Carbonsäurehalbamidgruppen enthaltenden Copolymerisaten, die ihrerseits erhältlich sind durch Umsetzung von Copolymerisaten aus Maleinsäureanhydrid und Diisobutylen und/oder Terpolymerisaten aus Maleinsäureanhydrid, Diisobutylen und einem mit Maleinsäureanhydrid copolymerisierenden Vinylmonomeren der Formel (1) mit 15–40 Mol-%, bezogen auf Maleinsäureanhydridgruppe, eines primären aliphatischen unverzweigten Monoamins mit 2 bis 6 C-Atomen.

Geeignete Vinylmonomere der Formel (1) zur Herstellung der Terpolymerisate sind beispielsweise Isobutylen, Styrol, $\alpha$-Methylstyrol, Allylalkohol, Methallylalkohol und Isobutylvinylether.

Die erfindungsgemässen Oberflächenleimungsmittel haben gegenüber den aus den DE-A

2 361 544, 2 501 123 und 2 701 760 bekannten Papierleimungsmitteln eine geringere oder keine Schaumneigung und besitzen ausserdem ein breiteres Anwendungsspektrum, bezogen auf die zu leimenden Papiersorten. Während nämlich die vorerwähnten Leimungsmittel bevorzugt auf solchen ungeleimten und vorgeleimten Papieren wirksam sind, die Aluminiumionen – meist in Form von Alaun – enthalten, zeigt das erfindungsgemässe Oberflächenleimungsmittel auch auf Papieren, die keine Aluminiumionen enthalten, eine sehr gute Leimung. Letzteres Verhalten ist besonders wichtig, da mit diesem Produkt auch Papiere geleimt werden können, wenn sie Kreide als Füllstoff enthalten, da hierbei der Leimungsvorgang zumeist bei pH-Werten um 7 und ohne die Anwesenheit von Alaun vorgenommen wird.

Normalerweise werden in der Praxis für alaunhaltige Papiere anionische und für alaunfreie Papiere sowie für Papiere, die Kreide als Füllstoff enthalten, kationische Oberflächenleimungsmittel eingesetzt. Durch seine besonderen Charakteristika kann das erfindungsgemässe Produkt sowohl im Anwendungsbereich eines anionischen als auch eines kationischen Leimungsmittels angewendet werden. Im Gegensatz zu kationischen Produkten besitzt es darüberhinaus noch den Vorteil, dass es nicht wie diese die Wirksamkeit von im Papier anwesenden optischen Aufhellern negativ beeinflusst.

Als Beispiele für die einzusetzenden Amine seien genannt: Ethylamin, n-Propylamin, n-Butylamin, n-Pentylamin und n-Hexylamin. Es können auch Gemische dieser Amine eingesetzt werden. Die Umsetzung der Copolymerisate aus Maleinsäureanhydrid und Diisobutylen oder der Terpolymerisate aus Maleinsäureanhydrid, Diisobutylen und einem Vinylmonomeren mit den Monoaminen wird in Lösungsmittel wie z.B. Benzol, Toluol, Xylol, Aceton, Methylethylketon, Dimethylformamid, Tetrahydrofuran und Dioxan durchgeführt. Auch Gemische der erwähnten Lösungsmittel kommen in Betracht. Die Temperatur, bei der diese partielle Amidierung vorgenommen wird, kann zwischen 20 und 120 °C liegen, bevorzugt ist jedoch ein Temperaturbereich zwischen 30 und 100 °C. Die Umsetzungszeit liegt zwischen 1 und 14 Stdn., wobei eine Reaktionszeit zwischen 2 und 8 Stdn. bevorzugt wird.

Natürlich ist es auch möglich, Diisobutylen direkt mit den entsprechenden Maleinsäurehalbamiden unter den gleichen Bedingungen, wie sie bei der Diisobutylen-Maleinsäureanhydrid-Copolymerisation üblich sind, zu den entsprechenden Copolymerisaten zu copolymerisieren.

Da nach den beschriebenen Verfahren immer nur ein Teil der Maleinsäureanhydridgrundbausteine des Copolymeren amidiert ist, sind weitere Maleinsäureanhydridgruppen einer Umsetzung mit Monoalkoholen zu Halbestern zugänglich. Auch solche Produkte können in Form ihrer alkali-, Ammonium- oder Aminsalze vorzüglich als amionische Papierleimungsmittel im sauren und neutralen Bereich eingesetzt werden. Geeignet zur Darstellung der Halbester sind lineare oder verzweigte aliphatische Monoalkohole mit 1 bis 20 C-Atomen. Die in den Copolymeren nach der partiellen Amidierung noch vorhandenen Anhydridgruppen können dabei zu 10 bis 100 Mol-% zu den entsprechenden Halbestern umgesetzt werden.

In einer bevorzugten Ausführungsform der Erfindung werden die Leimungsmittel als wässrige Lösungen mit Mischung mit Harnstoff und Harnstoffderivaten eingesetzt. Geeignete Harnstoffderivate sind solche, bei denen eines oder beide Stickstoffatome mit $C_1$–$C_4$-Alkylgruppen oder $C_1$–$C_4$-Hydroxyalkylgruppen, wie z.B. Hydroxymethylgruppen, substituiert sind. Als Beispiele für derartige Derivate seien Dimethylharnstoff, Tetramethylharnstoff und Dimethylolharnstoff genannt. Die Menge an zugesetztem Harnstoff bzw. Harnstoffderivaten beträgt dabei im allgemeinen 10 bis 200 Gew.-%, vorzugsweise 20 bis 100 Gew.-%, bezogen auf die Halbamid/Halbammoniumsalze der partiell amidierten Co- bzw. Terpolymerisate auf Basis von Maleinsäureanhydrid und Diisobutylen.

Der Zusatz von Harnstoff bzw. Harnstoffderivaten bewirkt dabei, dass die Menge an Polymerisat verringert werden kann, ohne die ausgezeichneten Leimungseigenschaften zu beeinträchtigen, die ohne Harnstoffzusatz nur mit einer höheren Polymerisatmenge erreicht werden.

Darüber hinaus erfüllen die durch Mischung mit Harnstoff bzw. Harnstoffderivaten erhältlichen Leimungsmittel die an ein Papieroberflächenleimungsmittel in der Praxis gestellten Anforderungen hinsichtlich niedriger Lösungsviskosität und geringer Neigung zur Schaumbildung in extrem guter Weise.

Zur Kombination mit Harnstoff bzw. Harnstoffderivaten eignen sich sowohl die vorerwähnten Halbamid/Halbammoniumsalze von Maleinsäureanhydrid/Diisobutylen-Copolymerisaten bzw. Terpolymerisaten als auch die obengenannten Halbamid/Halbammoniumsalze, bei denen die Maleinsäureanhydrideinheiten zusätzlich mit Monoalkoholen partiell verestert sind. Geeignet zur Darstellung der Halbester sind lineare oder verzweigte aliphatische Monoalkohole mit 1 bis 20 C-Atomen. Die in den Copolymeren nach der partiellen Amidierung noch vorhandenen Anhydridgruppen können dabei zu 10 bis 100 Mol-% zu den entsprechenden Halbestern umgesetzt werden. Auch diese Produkte stellen anionische Papierleimungsmittel mit einer äusserst geringen Schaumneigung dar, welche im sauren und neutralen pH-Bereich eingesetzt werden können.

Durch den Zusatz von Harnstoff bzw. Harnstoffderivaten zu den Lösungen der Polymerisate kann die Konzentration dieser Polymerisate in der wässrigen Leimungsmittellösung stark verringert werden, wobei die gleiche Leimungswirkung erreicht wird, wie es bei alleiniger Anwendung der Polymerisate nur bei einer erheblich höheren Konzentration erzielt werden kann. Der Harnstoffzusatz bewirkt also, dass z.B. die Menge an Halbamid/Halbammoniumsalz des amidierten

Copolymerisats aus Maleinsäureanhydrid und Diisobutylen in der Leimungsmittellösung stark erniedrigt werden kann, ohne dass die ausgezeichneten Leimungseigenschaften des Produktes darunter leiden.

Die erfindungsgemässen Oberflächenleimungsmittel für Papier sind nach allen bei der Papierherstellung für die Oberflächenleimung gebräuchlichen Verarbeitungsmethoden einsetzbar. Die Leimungsmittel können sowohl allein als auch in Kombination mit Kunststoffdispersionen zur Anwendung kommen. Ihre geringe Neigung zum Schäumen ist auch unter ungünstigen apparativen Voraussetzungen unabhängig vom Härtegrad des eingesetzten Wassers gegeben. Die Produkte eignen sich entweder allein oder in Kombination mit Leimungsmitteln, die zur Papier-Masse zugegeben werden, für die Oberflächenleimung der meisten gängigen Papierqualitäten, wie z. B. alaunhaltige, alaunfreie, mit China Clay gefüllte, mit Kreide gefüllte, neutrale, saure, ungeleimte, vorgeleimte, holzhaltige und Altpapier enthaltende Papiere.

Die Prozentangaben in den folgenden Beispielen beziehen sich stets auf das Gewicht.

Beispiel 1

Herstellung des Papieroberflächenleimungsmittels 1:

In einem 3-l-Rührgefäss mit Rückflusskühler, Innenthermometer, Stickstoffeinleitung und zwei aufgesetzten Tropftrichtern werden 392 g (4,0 Mol) Maleinsäureanhydrid und 500 g Xylol vorgelegt. Unter Überleiten von Stickstoff werden bie 100 °C innerhalb von 3–4 Stdn. 640 g (5,7 Mol) Diisobutylen (technisches Gemisch aus 2,4,4-Trimethylpenten-(1) und 2,4,4-Trimethylpenten-(2) und 12,54 g (0,076 Mol) Azobisisobutyronitril (AJBN) in 400 g Xylol gleichzeitig zudosiert. Nach beendetem Zutropfen werden ebenfalls gleichzeitig während $^1/_4$ Std. 24 g (0,43 Mol) Isobutylen in das Reaktionsgemisch eingeleitet und 3,76 g (0,017 Mol) t-Butyl-per-2-ethyl-hexanoat in 30 g Xylol zugetropft und noch 5 Std. bei 100 °C gerührt. Danach gibt man 92,68 g (1,54 Mol) Isopropanol zu und kühlt unter Rühren innerhalb 1 Std. auf 60° ab. Daran anschliessend werden während $^1/_2$ Std. 109,8 g (1,50 Mol) n-Butylamin zugegeben und innerhalb von 12 Stdn. mit den Anhydridgruppen des im Reaktionsgemisch befindlichen Polymeren bei einer Temperatur von 80 °C zur Umsetzung gebracht.

Durch kontinuierliches Einleiten des entstandenen Polymerlösung in Wasser von 90 °C wird unter Abdestillieren des Lösungsmittels und des nicht copolymerisierenden 2,4,4-Trimethylpenten-(2) im Vakuum das Polymere als feines weisses Pulver ausgefällt. Nachdem durch ca. zweistündiges Anlegen eines Vakuums von ca. 190 bis 266 mbar restliches Xylol und Diisobutylen entfernt worden ist, wird das Polymere durch Zugabe von 25%iger wässriger Ammoniaklösung aufgelöst und durch Entgasen unter Anlegen eines Vakuums von 190 bis 38 mbar bei einer Temperatur von 50 °C von den letzten Lösungsmittel- und Monomerspuren befreit. Durch Verdünnen mit Wasser wird die Lösung auf einen Feststoffgehalt von ca. 19 Gew.-% eingestellt. Diese Lösung eignet sich ausgezeichnet zur Oberflächenleimung von Papier, wie durch die nachfolgenden Anwendungsbeispiele gezeigt wird.

Beispiel 2

Herstellung des Papieroberflächenleimungsmittels 2:

In einem 40-l-Stahlautoklaven werden 10 080 g (48,0 Mol) eines alternierenden Copolymeren aus Maleinanhydrid und Diisobutylen in 13 380 g Methylethylketon bei Raumtemperatur gelöst. Danach dosiert man ebenfalls bei Raumtemperatur innerhalb von 2 Stdn. eine Lösung von 1063 g (14,56 Mol) n-Butylamin und 300 g (5 Mol) Isopropanol in 800 g Methylethylketon zu. Nach beendeter Aminzugabe wird das Reaktionsgemisch auf 60 °C erhitzt und noch 4 Stdn. bei dieser Temperatur gerührt. Diese Copolymerlösung wird durch Einleiten unter Vakuum in einen 100-l-Fällkessel, in dem sich 60 l Wasser von 50–60 °C befinden, unter gleichzeitigem Abdestillieren des Lösungsmittels gestrippt, wobei eine feinteilige wässrige Suspension des Polymeren entsteht. Durch Zugabe von 6750 g einer 25%igen wässrigen Ammoniaklösung wird die Copolymersuspension in eine wässrige Lösung umgewandelt, die anschliessend unter Anlegung eines Vakuums von 240 bis 38 mbar bei einer Temperatur von 50 °C von den letzten Spuren an Lösungsmittel befreit wird. Durch Verdünnen mit Wasser wird ein Feststoffgehalt von 19 Gew.-% eingestellt, und die so dargestellte wässrige Copolymerlösung als Oberflächenleimungsmittel für Papier eingesetzt.

Anwendungsbeispiel 1

Das Anwendungsbeispiel 1 soll die gute Leimungswirkung des im Herstellungsbeispiel 1 beschriebenen Papieroberflächenleimungsmittels auf Papieren unterschiedlicher stofflicher Zusammensetzung demonstrieren. Als Mass für die spezielle Leimung wurde dabei der Cobb-Wert (nach DIN 53 132) bestimmt.

Die verwendeten Papiere hatten folgende Zusammensetzung:

a) Alaunfreies Papier:

50% Nadelholzzellstoff, 50% Laubholzzellstoff, 9,5% Clay-Asche, pH-Wert im Stoffauflauf: 7,5; Nassaufnahme in einer Laborleimpresse: ca. 85%; Papiergewicht: 80 g/m$^2$.

b) Alaunhaltiges Papier:

50% Nadelholzzellstoff, 50% Laubholzzellstoff, 1% Alaun, 11,2% Clay-Asche, pH-Wert im Stoffauflauf: 4,4; Nassaufnahme: ca. 80%; Papiergewicht: 80 g/m$^2$.

c) Vorgeleimtes Papier:

50% Nadelholzzellstoff, 50% Laubholzzellstoff, 1% Alaun, 0,1% Bewoidleim, 11,1% Clay-Asche, pH-Wert im Stoffauflauf: 4,5; Nassaufnahme: ca. 80%; Papiergewicht: 80 g/m$^2$.

d) Kreidehaltiges Papier:
50% Nadelholzzellstoff, 50% Laubholzzellstoff, 7,9% Kreide-Asche, pH-Wert im Stoffauflauf: 7,5; Nassaufnahme: ca. 90%; Papiergewicht: 75 g/m².

e) Holzhaltiges Papier:
40% Nadelholzzellstoff, 60% Holzschliff, 14,1% Clay-Asche, pH-Wert im Stoffauflauf: 4,5; Nassaufnahme: ca. 40%, Papiergewicht: 75 g/m².

Die Leimung der Papiere erfolgte auf einer Laborleimpresse der Fa. Mathis, Zürich, Schweiz, Type HF. Als Leimungsflotte wurde eine Lösung von 5 Gew.-% handelsüblicher Stärke und 0,19 bis 0,24 Gew.-% des zu prüfenden Leimungsmittels (berechnet als 100%ige Wirksubstanz) in 94,87 bis 94,76 Gew.-% Wasser verwendet.

Die Trocknung der oberflächengeleimten Papiere erfolgte auf einem Trockenzylinder innerhalb einer Minute bei ca. 100°C. Vor der Leimungsprüfung wurden die Papiere 2 Stdn. bei Raumtemperatur klimatisiert.

| Papiersorte | Cobb-Wert in g/m² bei Zusatz von 0,19% | 0,24% Leimungsmittel (100%ig) zur Flotte |
|---|---|---|
| Alaunfrei | 24,0 | 22,4 |
| Alaunhaltig | 19,7 | 19,1 |
| Vorgeleimt | 18,5 | 17,4 |
| Kreidehaltig | 23,5 | 22,0 |
| Holzhaltig | 18,5 | 17,9 |

Anwendungsbeispiel 2

Mit diesem Beispiel soll die gegenüber dem Stand der Technik (Oberflächenleimungsmittel gemäss DE-A 2 361 544) verbesserte Leimungswirkung der erfindungsgemässen Leimungsmittel auf alaunfreien und kreidehaltigen Papiersorten aufgezeigt werden. Der Leimungsgrad wurde dabei sowohl durch den Cobb-Wert in g/m² als auch mit dem Hercules Sizing Tester bestimmt.

Beim Hercules Sizing Tester wird entsprechend der Bedienungsanleitung der Herstellerfirma Hercules Inc., Wilmington, Delaware, USA, die Zeit in sec registriert, die bis zum Remissionsabfall auf 75% des Remissionswertes von Papier vergeht, wenn die Prüftinte auf das Papier aufgebracht wird und durch das Papier durchschlägt. Als Prüftinte wird dabei die grüne Tinte der Fa. Hercules eingesetzt.

a) Alaunfreies Papier:

| | Cobb-Wert in g/m² bei Zusatz von 0,19% | 0,24% Leimungsmittel (100%ig) zur Flotte | Leimungsgrad nach Hercules in sec bei Zusatz von 0,19% | 0,24% Leimungsmittel (100%ig) zur Flotte |
|---|---|---|---|---|
| erfindungsgemässes Leimungsmittel 1 | 24,1 | 21,2 | 98 | 220 |
| Leimungsmittel gemäss DE-A 2 361 544 | 39,6 | 21,8 | 21 | 125 |

b) Kreidehaltiges Papier:

| | Cobb-Wert in g/m² bei Zusatz von 0,19% | 0,24% Leimungsmittel (100%ig) zur Flotte | Leimungsgrad nach Hercules in sec bei Zusatz von 0,19% | 0,24% Leimungsmittel (100%ig) zur Flotte |
|---|---|---|---|---|
| erfindungsgemässes Leimungsmittel | 25,1 | 21,8 | 175 | 236 |
| Leimungsmittel gemäss DE-A 2 361 544 | 45,8 | 25,5 | 85 | 203 |

Anwendungsbeispiel 3

Zur Bestimmung des Schaumverhaltens der erfindungsgemässen Leimungsmittel wurden diese in einer Laborschaumprüfapparatur untersucht, welche die Verhältnisse an der Leimpresse einer Papiermaschine ungefähr wiedergibt. Bei diesem Gerät wird die Leimungsflotte, die das zu prüfende Leimungsmittel, Stärke und evtl. weitere Zusätze enthält, aus einem thermostatisierten Becherglas mit konstanter Fördergeschwindigkeit durch eine am Boden dieses Becherglases befindliche Leitung abgesaugt und durch ein Stahlrohr, das durch den Deckel des Becherglases geführt ist, wieder in dasselbe zurückgepumpt. Dieses Stahlrohr endet 150 mm über der Flüssigkeitsoberfläche, so dass die Leimungsflotte im direkten Strahl auf sie auftrifft, wodurch eine Schaumbildung verursacht werden kann. Das nach einer bestimmten Versuchszeit über der Oberfläche der Leimungsflotte gemessene Schaumvolumen in ml stellt somit ein Mass für die Schaumneigung der zu untersuchenden Flüssigkeit dar.

Die folgende Tabelle gibt eine Übersicht über das mit Hilfe der o.g. Prüfapparatur untersuchte Schaumverhalten der in den Herstellungsbeispielen beschriebenen Oberflächenleimungsmittel 1 und 2 im Vergleich zu dem gemäss DE-A 2 361 544 hergestellten Produkt. Dazu wurden jeweils 700 ml einer wässrigen Leimungsmittelflotte hergestellt, die 5 Gew.-% einer handelsüblichen Stärke und 0,19 Gew.-% des zu untersuchenden Leimungsmittels enthielt. Die Lösungen wurden auf 60 °C erwärmt und mit einer Geschwindigkeit von 170 l/h durch die Prüfapparatur gepumpt. In Abständen von jeweils 5 Min. wurde das sich im Verlauf des Prüfung über der Flüssigkeitsoberfläche aufbauende Schaumvolumen in ml gemessen.

Tabelle:

| Leimungsmittel | Schaumvolumen in ml nach einer Versuchszeit von | | | | | |
|---|---|---|---|---|---|---|
| | 5 | 10 | 15 | 20 | 25 | 30 Min. |
| Leimungsmittel nach Beispiel 1 | 100 | 100 | 100 | 100 | 100 | 100 |
| Leimungsmittel nach Beispiel 2 | 100 | 100 | 100 | 100 | 100 | 100 |
| Leimungsmittel gemäß DE-A 2 361 544 | 700 | 800 | 900 | 1000 | 1200 | 1600 |

Beispiel 3

Herstellung von Leimungsmittel 3:

Die Herstellung des Polymeren erfolgt nach dem in Beispiel 1 beschriebenen Verfahren in einem 40-l-Rührautoklaven unter Stickstoff aus 4704 g Maleinsäureanhydrid, 7680 g Diisobutylen, 360 g Isobutylen, 1112 g Isopropanol und 1095 g n-Butylamin. Die erhaltene Polymerlösung wird kontinuierlich in eine Lösung von 6000 g Harnstoff in Wasser von 90 °C eingeleitet und, wie in Beispiel 1 beschrieben, aufgearbeitet. Durch abschliessendes Verdünnen mit Wasser wird eine harnstoffhaltige Leimungsmittellösung mit einem Gesamtfeststoffgehalt von ca. 22,5 Gew.-% hergestellt, die für die Anwendungsbeispiele 4–6 verwendet wird.

Anwendungsbeispiel 4

Wie in Anwendungsbeispiel 1 beschrieben, wird die Leimungswirkung auf verschiedenen Papiersorten bestimmt.

| Papiersorte | Cobb-Wert in g/m² bei Zusatz von 0,19% / 0,24% Leimungsmittel (100%ig) zur Flotte | |
|---|---|---|
| | 0,19% | 0,24% |
| Alaunfrei | 24,2 | 22,4 |
| Alaunhaltig | 19,5 | 18,5 |
| Vorgeleimt | 18,6 | 17,8 |
| Kreidehaltig | 23,8 | 22,2 |
| Holzhaltig | 19,4 | 18,5 |

Anwendungsbeispiel 5

Der Vergleich mit dem Leimungsmittel gemäss DE-A 2 361 544 erfolgt, wie in Anwendungsbeispiel 2 beschrieben.

a) Alaunfreies Papier:

| | Cobb-Wert in g/m² bei Zusatz von 0,19% | 0,24% Leimungsmittel (100%ig) zur Flotte | Leimungsgrad nach Hercules in sec bei Zusatz von 0,19% | 0,24% Leimungsmittel (100%ig) zur Flotte |
|---|---|---|---|---|
| erfindungsgemässes Leimungsmittel | 23,8 | 21,1 | 99 | 226 |
| Leimungsmittel gemäss DE-A 2 361 544 | 39,6 | 21,8 | 21 | 125 |

b) Kreidehaltiges Papier:

| | Cobb-Wert in g/m² bei Zusatz von 0,19% | 0,24% Leimungsmittel (100%ig) zur Flotte | Leimungsgrad nach Hercules in sec bei Zusatz von 0,19% | 0,24% Leimungsmittel (100%ig) zur Flotte |
|---|---|---|---|---|
| erfindungsgemässes Leimungsmittel | 24,7 | 21,5 | 181 | 242 |
| Leimungsmittel gemäss DE-A 2 361 544 | 45,8 | 25,5 | 85 | 203 |

Anwendungsbeispiel 6

Die Bestimmung des Schaumverhaltens erfolgt, wie in Anwendungsbeispiel 3 beschrieben. Die Lösungen werden jedoch bei der noch höheren Geschwindigkeit von 200 l/h durch die Prüfapparat gepumpt.

Tabelle:

| Leimungsmittel | Schaumvolumen in ml nach einer Versuchszeit von 5 | 10 | 15 | 20 | 25 | 30 Min. |
|---|---|---|---|---|---|---|
| erfindungsgemässes Leimungsmittel | 100 | 100 | 100 | 100 | 100 | 100 |
| Leimungsmittel gemäss DE-A 2 361 544 | 1000 | 1200 | 1400 | 1700 | 2000 | 2300 |

**Patentansprüche**

1. Oberflächenleimungsmittel für Papier in Form von wässrigen oder wässrig-alkoholischen Alkali-, Amin- oder Ammoniumsalzlösungen von Carbonsäurehalbamidgruppen enthaltenden Copolymerisaten, die erhältlich sind durch Umsetzung von Copolymerisaten aus Maleinsäureanhydrid und Diisobutylen und/oder Terpolymerisaten aus Maleinsäureanhydrid, Diisobutylen und einem mit Maleinsäureanhydrid copolymerisierenden Vinylmonomeren mit 15 bis 40 Mol-%, bezogen auf Maleinsäureanhydridgruppen, eines primären aliphatischen unverzweigten Monoamins mit 2 bis 6 C-Atomen.

2. Leimungsmittel gemäss Anspruch 1, dadurch gekennzeichnet, dass als Monoamine Ethylamin, n-Propylamin, n-Butylamin, N-Pentylamin und n-Hexylamin entweder alleine oder in Mischungen untereinander eingesetzt werden.

3. Leimungsmittel gemäss Ansprüchen 1 und 2, dadurch gekennzeichnet, dass die Lösungen, bezogen auf Co- bzw. Terpolymerisat, 10 bis 200 Gew.-% Harnstoff, alkylsubstituierten Harnstoff oder hydroxyalkylsubstituierten Harnstoff enthalten.

**Claims**

1. Surface sizing agents for paper in the form of aqueous or aqueous-alcoholic alkali metal, amine or ammonium salt solutions of copolymers containing carboxylic acid semi-amide groups, which are obtainable by reacting copolymers of maleic acid anhydride and diisobutylene and/or terpolymers of maleic acid anhydride, diisobutylene and a vinyl monomer copolymerising with maleic acid anhydride, with from 15 to 40 mole per cent, based on maleic acid anhydride groups, of a primary aliphatic unbranched monoamine having 2 to 6 C-atoms.

2. Sizing agents according to Claim 1, characterised in that ethylamine, n-propylamine, n-butylamine, n-pentylamine and n-hexylamine are used either individually or in admixture with one another as the monoamines.

3. Sizing agents according to Claims 1 and 2, characterised in that the solutions contain from 10 to 200% by weight, based on the copolymer or terpolymer, of urea, alkyl-substituted urea or hydroxyalkyl-substituted urea.

**Revendications**

1. Agents de collage en surface pour papier sous forme de solutions aqueuses ou hydro-alcooliques de sels de métaux alcalins, d'amines ou d'ammonium de copolymérisats portant des groupes semi-amide d'acide carboxylique, qui peuvent être obtenus par réaction de copolymérisats d'anhydride d'acide maléique et de diisobutylène et/ou de terpolymérisats d'anhydride d'acide maléique, de diisobutylène et d'un monomère vinylique se copolymérisant avec l'anhydride d'acide maléique, avec 15 à 40 moles %, par rapport aux groupes anhydride d'acide maléique, d'une monoamine aliphatique primaire non ramifiée ayant 2 à 6 atomes de carbone.

2. Agents de collage suivant la revendication 1, caractérisés en ce qu'on utilise comme monoamines l'éthylamine, la n-propylamine, la n-butylamine, la n-pentylamine et la n-hexylamine seules ou en mélanges les unes avec les autres.

3. Agents de collage suivant les revendications 1 et 2, caractérisés en ce que les solutions contiennent, par rapport au copolymérisat ou au terpolymérisat, 10 à 200% en poids d'urée, d'urée à substituant alkyle ou d'urée à substituant hydroxyalkyle.